Europäisches Patentamt

European Patent Office

Office européen des brevets

(19)

(11) **EP 1 375 235 A1**

(12) **DEMANDE DE BREVET EUROPEEN**

(43) Date de publication:
**02.01.2004 Bulletin 2004/01**

(51) Int Cl.$^7$: **B60K 31/00**

(21) Numéro de dépôt: **03291461.6**

(22) Date de dépôt: **17.06.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **17.06.2002 FR 0207435**

(71) Demandeur: **Renault s.a.s.**
**92100 Boulogne Billancourt (FR)**

(72) Inventeurs:
• **Chabanon, Christian**
  **27700 Tosny (FR)**
• **Miras-Etienne, Murielle**
  **78100 Saint Germain en Laye (FR)**

(54) **Procédé de régulation adaptative de la distance entre deux véhicules mobiles**

(57)    L'invention concerne un procédé de régulation adaptative de la distance entre deux véhicules circulant dans la même direction par contrôle de l'accélération du véhicule selon différents scénarios routiers, tel que la régulation de la distance sélectionnée tient compte d'une part de la volonté du conducteur de réduire ou d'allonger le temps de suivi déterminé auparavant automatiquement, constatée par ses actions identifiées avant et pendant la régulation de distance, sur les touches d'une interface de commande au volant pour la marche et l'arrêt de la régulation de distance, ainsi que sur les touches d'augmentation et de diminution de la vitesse de consigne ; d'autre part de la détection de brouillard ou de pluie intense ; enfin, de la vitesse des véhicules circulant sur les voies adjacentes à la voie de circulation du véhicule régulé pour ne pas déborder le système ACC et accroître le confort du régulateur.

## Description

La présente invention concerne un procédé de régulation adaptative de la distance entre deux véhicules circulant dans la même direction, destiné à s'appliquer en particulier aux systèmes de régulation de la distance et de régulation de la vitesse dans le but d'assister le conducteur dans sa tâche de conduite et d'améliorer son confort de conduite.

Dans le cadre de la régulation de distance, ou "Adaptative Cruise Control" (A.C.C.), qui permet au véhicule suiveur ainsi régulé de suivre le véhicule précédent à une distance de consigne prédéterminée grâce à un contrôle automatique de l'accélération, avec éventuellement une gestion des rapports dans le cas d'une boîte automatique, la demande de brevet français No. 00 08807, déposée au nom de RENAULT, propose un procédé de régulation à base de réseaux de neurones pour estimer le style de conduite, le trafic routier et les actions du conducteur et adapter ainsi les lois de contrôle de l'accélération du véhicule en phases d'approche, de suivi, d'insertion et de déboîtement. Le procédé a pour but de régler graduellement le temps de suivi entre le véhicule équipé de l'A.C.C. et le véhicule cible, en fonction des situations routières rencontrées d'une part et des actions du conducteur identifiées avant et pendant la régulation de distance A.C.C. d'autre part.

Le but de la présente invention est tout d'abord de prendre en compte la volonté du conducteur de réduire ou d'allonger le temps de suivi déterminé auparavant automatiquement par le calculateur électronique. De plus, il a été constaté que par mauvais temps, avec une visibilité réduite, il est beaucoup plus judicieux de choisir un temps de suivi maximal pour augmenter la facilité de reprise en main par le conducteur en cas de freinage brusque. Enfin, un autre but de l'invention est de prendre en compte la vitesse des véhicules circulant sur les voies adjacentes à la voie de circulation du véhicule régulé pour ne pas déborder le système ACC et accroître le confort du régulateur en anticipant les fortes décélérations.

Pour cela, l'objet de l'invention est un procédé de régulation adaptative de la distance entre deux véhicules circulant dans la même direction, le véhicule régulé suivant l'autre détecté comme cible, par établissement d'une loi de contrôle de l'accélération du véhicule selon différents scénarios routiers, qui sont définis à partir de la distance de consigne entre le véhicule suiveur et la cible suivie, en réglant graduellement le temps de suivi entre le véhicule régulé et le véhicule cible, en fonction du comportement du conducteur défini par son style de conduite et son caractère de freinage, du trafic routier et des actions du conducteur, identifiées avant et pendant la régulation de distance, sur les différentes touches d'une interface de commande placée sur le volant du véhicule pour la marche et l'arrêt de la régulation de distance, ainsi que sur les touches d'augmentation et de diminution de la vitesse de consigne, caractérisé en ce que la loi de régulation de la distance par contrôle de l'accélération, sélectionnée initialement en phase de suivi, est modifiée par au moins une impulsion sur la pédale d'accélérateur alors que le véhicule est en régulation de distance, dans le sens d'une réduction du temps de suivi.

Selon une autre caractéristique de l'invention, le procédé de régulation adaptative prévoit une modification de la loi de régulation de la distance, par contrôle de l'accélération sélectionnée initialement en phase de suivi, par la première impulsion sur le bouton « - » de l'interface à la mise en route du régulateur, dans le sens d'une augmentation du temps de suivi qui aurait été choisi en l'absence de cette action.

Selon une autre caractéristique de l'invention, le procédé de régulation adaptative prévoit une modification automatique de la loi de régulation de la distance, par contrôle de l'accélération, sélectionnée initialement, lors de la détection de brouillard ou de pluie intense réduisant la visibilité en imposant le temps de suivi maximal, ces conditions météorologiques étant détectées par des capteurs appropriés.

Selon une autre caractéristique de l'invention, le procédé de régulation adaptative prévoit que la loi de régulation de la distance, par contrôle de l'accélération, sélectionnée lors de la mise en route du régulateur par une première impulsion sur le bouton « resume » impose un temps de suivi maximal, qu'une deuxième impulsion sur le bouton « resume » rend la loi de régulation adaptative avec un temps de suivi calculé automatiquement en fonction du style de conduite et de la densité du trafic routier, qu'une troisième impulsion sur « resume » impose un temps de suivi minimal, et que toute nouvelle impulsion permute successivement deux des trois étapes de ce cycle de calcul du temps de suivi.

Selon une autre caractéristique de l'invention, le procédé de régulation adaptative prévoit que la loi de régulation de la distance, par contrôle de l'accélération, sélectionnée lors de la mise en route du régulateur par une première impulsion sur le bouton « resume » impose un temps de suivi maximal, qu'une deuxième impulsion sur le bouton « resume » rend la loi de régulation adaptative avec un temps de suivi calculé automatiquement en fonction du style de conduite et de la densité du trafic routier et variant entre cette valeur maximale imposée et un premier seuil inférieur, qu'une troisième impulsion sur « resume » rend la loi de régulation adaptative avec un temps de suivi calculé automatiquement en fonction du style de conduite et de la densité du trafic routier et variant entre cette valeur maximale imposée et un second seuil inférieur, et que toute nouvelle impulsion permute successivement deux des trois étapes de ce cycle de calcul du temps de suivi.

Selon une autre caractéristique de l'invention, le procédé de régulation adaptative prévoit que la loi de contrôle de l'accélération du véhicule sélectionnée initialement est modifiée par réduction adaptative de la vitesse de consigne en fonction de la densité du trafic routier, de la vitesse des véhicules sur les voies de circulation adjacentes et en fonction de la position du véhicule régulé sur lesdites voies de circulation.

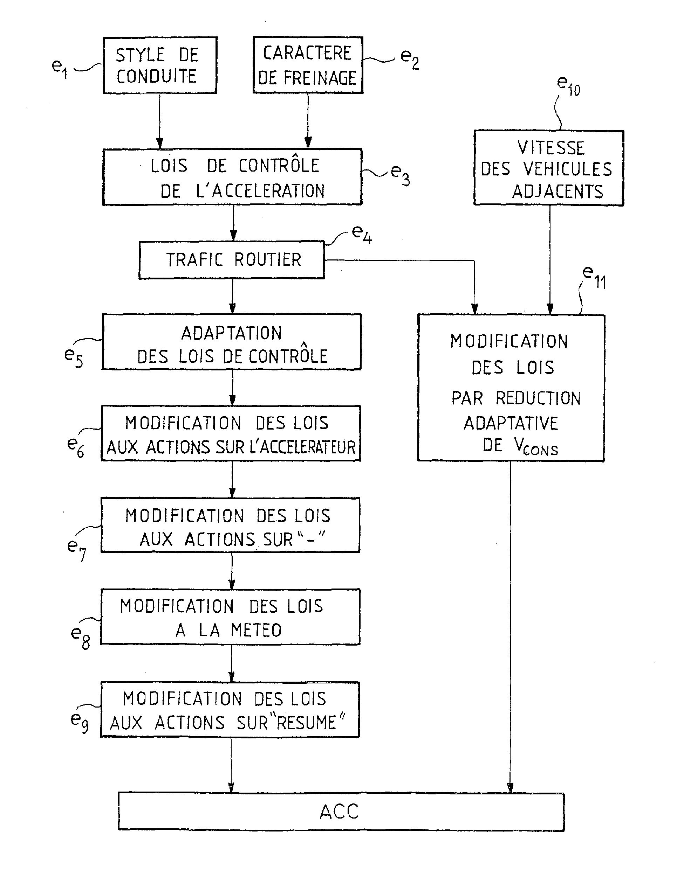

D'autres caractéristiques et avantages de l'invention apparaîtront à la lecture de la description d'un procédé de régulation, illustrée par la figure unique qui est l'organigramme du procédé de régulation de distance selon l'invention.

Un véhicule équipé d'un régulateur de distance comporte des moyens délivrant des informations relatives aux objets de la scène routière à l'avant du véhicule, constitués par les véhicules circulant devant le véhicule équipé, les bords de la route, les panneaux, etc.... Ces informations sont envoyées à un calculateur électronique qui calcule les distances $D_r$ et les vitesses $V_r$ relatives de l'ensemble des cibles, et qui les traite ensuite pour sélectionner la cible à prendre en compte parmi les différents objets détectés.

Le véhicule équipé d'un système A.C.C. comporte également un capteur de vitesse embarqué, délivrant une information sur sa vitesse $V_{ACC}$ et son accélération $\Gamma_{ACC}$ par traitement de la vitesse, et une interface de commande entre le conducteur et le régulateur, qui permet au conducteur de choisir une vitesse de consigne $V_c$ et de le renseigner à tout moment sur l'état du système.

Le calculateur va alors élaborer une loi de régulation de la distance du véhicule, à partir de ces informations sur le véhicule équipé lui-même et sur le véhicule cible, et de la vitesse de consigne choisie par le conducteur. Cette loi permet d'établir une accélération de consigne $\Gamma_c$ sur laquelle va être asservi le fonctionnement du véhicule par le calculateur, qui fixe une consigne d'ouverture du papillon d'admission d'air ou d'injection diesel, une consigne de pression du freinage appliquée aux freins et une consigne de rapport n de la boîte de vitesses automatique.

A tout instant, le régulateur de distance ACC détermine, en fonction de la vitesse $V_r$ et la distance $D_r$ relatives de la cible, ainsi que de la vitesse du véhicule équipé $V_{ACC}$, dans quel scénario se trouve le véhicule équipé, c'est-à-dire s'il est en situation ou phase d'approche sur un véhicule cible, en phase de suivi, en phase de déboîtement ou en phase d'insertion détectées par la mise en route d'un clignotant par exemple, ou simplement en phase de régulation de vitesse si aucune cible n'est détectée devant le véhicule.

Les différents scénarios routiers sont définis à partir de la distance de consigne $D_c$ entre le véhicule suiveur S, circulant à la vitesse $V_{ACC}$, et la cible suivie C se déplaçant à la vitesse $V_{ci}$. La distance de consigne $D_c$ est liée au temps de suivi $t_s$ par la relation E :

$$(E) \qquad D_c = t_s \times V_{ci} + D_{min}$$

$D_{min}$ correspondant à la distance de consigne lorsque la vitesse de la cible est nulle. Pour déterminer cette distance de consigne, adaptée au style de conduite du conducteur, le procédé analyse son comportement en permanence. Leur localisation dans le plan de phase des vitesses et des distances relatives est obtenue à partir de la distance de consigne, donc du temps de poursuite qui en découle.

Un premier scénario d'observation est défini tant que la cible détectée est en dehors de la distance de consigne avec une vitesse relative progressive, c'est-à-dire qu'elle s'éloigne avec une vitesse $V_{ci}$ supérieure à la vitesse $V_{ACC}$ du véhicule suiveur S.

Un deuxième scénario d'approche correspond à l'approche par le véhicule suiveur S d'une cible C circulant sur sa voie, à vitesse inférieure, l'obligeant à décélérer pour adapter sa vitesse $V_{ACC}$ à celle de la cible $V_{ci}$ plus lente que lui.

Un troisième scénario, dit d'insertion ou de déboîtement d'une cible C devant un véhicule suiveur S, se produit quand le véhicule cible est à l'intérieur de la distance de consigne, mais roule plus vite que le véhicule suiveur, ce qui correspond à deux types de situations routières :

- l'insertion d'un véhicule plus rapide dans la voie du véhicule en régulation et devenant une cible pour ce dernier ;
- le déboîtement du véhicule suiveur pour dépasser le véhicule cible, ce déboîtement sur une voie adjacente le plaçant derrière un nouveau véhicule cible plus rapide.

Un quatrième scénario dit de danger correspondant au fait que le véhicule suiveur S est à l'intérieur de la distance de consigne $D_c$, avec une vitesse $V_{ACC}$ supérieure à celle de la cible $V_{ci}$ Il peut se produire entre les phases d'approche et de suivi, ou dans le cas d'un dépassement par une cible qui se rabat brutalement devant le véhicule lors d'une manoeuvre dite en "queue de poisson", ou de freinage de la cible C en cours de suivi.

Un cinquième scénario dit de suivi correspond à la situation du véhicule suiveur à la distance de consigne $D_c$ de la cible, avec une vitesse $V_{ACC}$ égale à celle de la cible $V_{ci}$.

A tout instant également, avant la mise en marche de la régulation comme pendant son fonctionnement, le régulateur de distance ACC évalue le style de conduite du conducteur du véhicule régulé par son degré d'appartenance à trois états qualifiés respectivement de "calme", de "dynamique" et de "sportif, ce qui fait l'objet de l'étape e1) de l'organigramme de la figure unique.

Le caractère de freinage est également évalué, ( étape e2 ) en présence d'un véhicule cible détecté et de la pression de freinage qui doit dépasser un seuil prédéterminé, par son degré d'appartenance à trois états de freinage qualifiés de "précoce", de "standard" et de "tardif".

Une fois évalués ces deux critères représentatifs du comportement du conducteur, le calculateur électronique détermine les lois de commande de l'accélération du véhicule en phases d'approche, de suivi, d'insertion et de déboîtement, au nombre de neuf au maximum correspondant aux neuf combinaisons possibles entre le style de conduite et le caractère de freinage (étape e3).

Le tableau 1, représenté en annexe, est un exemple de cinq lois $L_1$ à $L_5$ de contrôle de l'accélération du véhicule dans lequel les lois concernant un freinage standard sont également appliquées pour un freinage qualifié de tardif. Pour un style de conduite qualifié de calme associé à un freinage qualifié de précoce, la loi $L_1$ impose un temps de suivi $t_s$ maximal de deux secondes. Pour un même style calme, mais un freinage soit standard, soit tardif, la loi $L_2$ impose un temps de suivi $t_s$ plus court, de 1,6 seconde par exemple. On constate que plus le style est sportif et plus le freinage est tardif, plus le temps de suivi est court, ne pouvant descendre cependant en dessous de 1 seconde.

Le procédé de régulation en distance réalise également une estimation du trafic routier ( étape e4 ) en vue d'une meilleure adéquation des lois avec la densité du trafic ( étape e5 ). Cette estimation est réalisée à tout moment avant et pendant la régulation de distance, à partir de la vitesse $V_{ACC}$ du véhicule régulé, et de la liste des véhicules circulant à l'avant de ce dernier, sur toutes les voies de circulation, chaque véhicule cible étant caractérisé par sa distance $D_r$ et sa vitesse $V_r$ relatives par rapport au véhicule régulé, ainsi que par sa position ou son azimut. L'état du trafic est alors qualifié respectivement de "fluide", de "normal" ou de "dense".

De plus, le procédé de régulation de distance adapte les lois initialement sélectionnées en fonction du style de conduite du conducteur, aux actions du conducteur sur les différentes touches d'interface placées sur le volant du véhicule. En effet, le conducteur peut mettre en marche ou arrêter la régulation de distance de son véhicule par les touches "Résume" et "OFF" respectivement, ainsi qu'augmenter et diminuer la vitesse de consigne par les touches "+" et "-". Ces actions sur les touches au volant doivent être relativisées par rapport à la vitesse moyenne du trafic routier d'une part et par rapport à la vitesse de consigne sélectionnée d'autre part.

Concernant les touches "+" et "-", il y a deux types d'action du conducteur. Un premier type consiste à ajuster la vitesse de consigne à une valeur proche de la vitesse moyenne de l'ensemble des véhicules constituant le trafic routier. Dans ce cas, le conducteur, généralement débutant, agit par petites impulsions pour corriger en permanence cette valeur de consigne, car il souhaite garder une maîtrise du pilotage et ne pas déléguer la fonction au système. Alors, le procédé de régulation ne tient pas compte de ces petites variations pour l'ajustement de la loi de commande.

Le second type d'action sur les touches au volant consiste à vouloir fixer une vitesse de consigne bien au-dessus ou bien en dessous de la vitesse moyenne du trafic. Deux cas se présentent : dans le cas où le conducteur appuie sur la touche "+" pour augmenter la vitesse de consigne, le procédé considère qu'il manifeste son intention de se rapprocher de la cible qu'il suit et donc modifie la loi initiale $L_i$ applicable en phase d'approche quel que soit l'état du trafic routier en diminuant la distance et le temps de suivi. Dans le second cas où le conducteur appuie sur la touche « - » , le procédé considère qu'il manifeste son intention de s'éloigner de la cible et donc augmente la distance et le temps de suivi.

Un premier but de l'invention se rapporte à une modification des lois de régulation adaptative de la distance par adaptation du temps de suivi selon une action volontaire du conducteur.

Selon une première caractéristique de l'invention, les lois de régulation de la distance en phase de suivi derrière une cible, sélectionnées auparavant, sont modifiées par une ou plusieurs impulsions sur la pédale d'accélérateur qui suspend provisoirement la régulation sans la supprimer ( étape e6 ). Une action sur la pédale d'accélérateur est immédiatement effective puisque l'action du conducteur est prioritaire sur l'action du régulateur de distance. Elle est mémorisée si le véhicule est en phase de suivi derrière une cible, afin de conserver cette valeur de temps de suivi pendant tout le trajet, chaque fois que le véhicule sera en scénario de suivi. Les premières actions sur l'accélérateur provoquent deux types de réduction du temps de suivi

- tout d'abord, le changement du caractère de freinage de précoce à standard, respectivement de standard à tardif, si le conducteur est initialement en caractère de freinage précoce, respectivement en standard, comme le montre le tableau 2 en annexe, correspondant à un scénario de suivi ;
- puis l'incrémentation de la loi sélectionnée dans les styles de conduite qualifiés de calme, dynamique, ou sportif, donc la réduction du temps de suivi, en phase de suivi uniquement comme le montre le tableau 3, représenté en annexe.

De nouvelles actions sur la pédale d'accélérateur n'entraînent aucun incrément supplémentaire de la loi de suivi. Ainsi, dans le cas d'un caractère de freinage tardif, un conducteur calme, respectivement dynamique, en suivi derrière une cible, aura un temps de suivi de 1.4 seconde, respectivement 1 seconde, dans un trafic fluide, de 1.2 sec., respectivement de 1 sec., dans un trafic normal, et de 1 sec. partout en trafic dense.

Selon une autre caractéristique de l'invention, les lois de régulation de la distance en phase de suivi derrière une cible, sélectionnées auparavant, sont modifiées par une impulsion sur le bouton « - » à la mise en route du régulateur ( étape e7 ). On constate que, par prudence, certains conducteurs utilisent pour la mise en route du régulateur, le bouton « - » placé sur le volant. La première impulsion, pour la mise en action, fixe la vitesse de consigne à suivre à la vitesse courante du véhicule. Selon le procédé, cette mise en route par le bouton « - » augmente le temps de suivi qui aurait été choisi en l'absence de cette action, afin de rassurer le conducteur prudent en augmentant la distance de son véhicule à la cible.

La valeur de cette augmentation du temps de suivi à la suite d'une mise en route du régulateur par une action sur le bouton « - », s'accroît en fonction de la densité du trafic routier qui se densifie.. Par exemple, la loi $L_i$ sélectionnée par une mise en route à l'aide du bouton « - » sera la loi $L_{i-1}$ par une mise en route à l'aide du bouton « - » en trafic fluide, $L_{i-2}$ par une mise en route à l'aide du bouton « -» en trafic normal et $L_{i-3}$ par une mise en route à l'aide du bouton « -» en trafic dense.

De plus, le procédé prévoit que cette augmentation du temps de suivi, à la suite d'une mise en route du régulateur par une action sur le bouton « - », positionne le caractère de freinage précoce en particulier lorsque le caractère de freinage est tardif chaque fois que ce mode de mise en route est utilisé. Ainsi, ce basculement en freinage précoce va augmenter la distance de début de freinage à l'approche d'une cible détectée, ce qui va rassurer le conducteur par un temps de suivi encore plus long. Le tableau 4 en annexe est un exemple de décrémentation, après une action du conducteur sur le bouton « - » lors de la mise en route de la régulation de la distance. A partir de la loi $L_i$ calculée initialement en fonction du style du conducteur, de son caractère de freinage et de la densité du trafic routier, l'action sur le bouton « - » conduit à décrémenter la loi quand le conducteur ne souhaite pas déboîter, pour les trois scénarios routiers d'approche, de suivi et d'insertion. On constate qu'en suivi de la cible, on augmente le temps de suivi, donc la distance entre les véhicules, au détriment des insertions éventuelles entre le véhicule ACC et sa cible alors que le trafic s'intensifie. La prudence est accrue par l'effet de mise à la distance de consigne qui engendre une vitesse moins importante que celle du flot de véhicules.

Le procédé selon l'invention prévoit la suppression de la réduction du temps de suivi, survenue en phase de suivi d'une cible uniquement, en raison d'une action sur le bouton « + », ou de l'impulsion sur la pédale d'accélérateur, quand le conducteur déconnecte la régulation par une action sur la pédale de frein, alors que le véhicule est dans une phase d'approche ou de suivi. Dans ce cas, les incréments sur la loi de suivi sont abandonnés, mais le changement du caractère de freinage reste valable.

Le procédé prévoit également la suppression de la réduction du temps de suivi survenue en phase de suivi d'une cible et le positionnement du caractère de freinage précoce, si le conducteur décide d'arrêter la régulation par une action sur la pédale de frein, alors que le véhicule est en phase de danger ou d'insertion.

Par contre, le procédé conserve par mémorisation la réduction du temps de suivi liée à une impulsion sur la pédale d'accélérateur, si le conducteur décide d'arrêter la régulation par une action sur le bouton « off » d'arrêt au volant, ou sur la pédale de frein alors que le véhicule est en phase de régulation de vitesse en l'absence de cible ou d'observation quand la cible est loin. Le tableau 5 en annexe résume les différentes actions possibles du conducteur pour réduire le temps de suivi.

Selon une autre caractéristique, le procédé impose automatiquement le temps de suivi maximal lors de la détection de brouillard ou de pluie intense qui réduisent la visibilité ( étape e8 ). Ces conditions météorologiques sont détectées par des capteurs appropriés. En effet, la réduction de la visibilité par temps de forte pluie ou de brouillard amène le conducteur à surestimer la distance de suivi et le freinage qu'il aura à effectuer en cas de reprise en main du véhicule, aussi le procédé impose-t-il le temps de suivi maximal.

Certains conducteurs souhaitent avoir la possibilité de choisir entre les deux modes : le mode manuel et le mode adaptatif. Pour les plus prudents, le procédé propose que, lors de la mise en route de la régulation par une première impulsion sur le bouton « resume », le temps de suivi soit maximal, soit égal à 2s. Ainsi la distance à la cible sera la plus grande permise. Une impulsion supplémentaire sur le bouton « resume » place le régulateur en mode automatique, c'est-à-dire qu'il calcule le temps de suivi automatiquement en adéquation avec le style du conducteur et la densité de trafic. Une troisième impulsion sur le bouton « résume » impose une valeur minimale du temps de suivi, soit une seconde. Les impulsions suivantes sur le bouton « resume » permutent successivement deux des trois étapes de ce cycle de calcul du temps de suivi précédemment décrit : temps de suivi imposé maximal à 2s, temps de suivi adaptatif entre les valeurs maximale de 2s et minimale de 1s, et temps de suivi imposé minimal à 1s. C'est sur une action volontaire du conducteur sur le bouton « resume » ( étape e9) que le régulateur change la loi de régulation de la distance par modification du temps de suivi.

Selon une variante de cette prise en compte de la volonté du conducteur, pour satisfaire les conducteurs les plus prudents, le procédé propose un nouveau cycle de calcul du temps de suivi. Comme précédemment lors de la mise en route de la régulation par une première impulsion sur le bouton « resume », le temps de suivi est maximal, soit égal à 2s. Ainsi la distance à la cible sera la plus grande permise. Puis une impulsion supplémentaire place le régulateur en mode automatique avec calcul du temps de suivi automatiquement en fonction du style du conducteur et de la densité du trafic, entre un seuil maximal, égal à 2s, et un premier seuil minimal de valeur prédéterminée, égal à 1.4s. Une troisième impulsion sur le bouton « resume » maintient le régulateur en mode automatique, mais entre le seuil maximal, égal à 2s, et un second seuil minimal, de valeur inférieure à celle du premier seuil minimal, soit égale à 1s. Les impulsions suivantes sur le bouton «résume» permutent successivement deux des trois étapes de ce nouveau cycle de calcul du temps de suivi précédemment décrit : temps de suivi imposé maximal à 2s, temps de suivi adaptatif entre les valeurs maximale de 2s et minimale de 1,4s, et temps de suivi adaptatif entre les valeurs maximale de 2s et minimale de 1s.

Un deuxième but de l'invention est de proposer une modification des lois de contrôle de l'accélération du véhicule ( étape e11 ) par réduction adaptative de la vitesse de consigne en fonction de la densité du trafic routier, de la vitesse des véhicules sur les voies adjacentes calculée à l'étape e10) et en fonction de la position du véhicule régulé sur lesdites voies de circulation, comme le montre le tableau 6, représenté en annexe.

Ainsi, le seuil ou la vitesse de consigne $V_{cons}$ choisie par le conducteur est abaissée en fonction de l'augmentation du trafic routier sur la voie de circulation du véhicule et sur les voies latérales droite et gauche selon qu'il se trouve sur la voie de gauche, la voie centrale ou la voie de droite. Cette mesure de précaution est basée sur le principe que les insertions dans les voies adjacentes ou la mobilité des véhicules d'une voie à l'autre sont d'autant plus dangereuses que la densité de trafic et la vitesse entre les voies latérales sont élevées.

De plus, cet abaissement de la vitesse de consigne varie différemment selon cette position de circulation du véhicule régulé, c'est-à-dire s'il double un ou plusieurs véhicules cibles par la file de droite, par la file de gauche ou en circulant sur la voie centrale. En effet, si ie conducteur souhaite doubler par la voie de gauche de la circulation, la vitesse de consigne est minorée d'autant plus fortement que la densité du trafic augmente. Sur la colonne de gauche du tableau 6, on constate que la valeur de ta vitesse de consigne est le minimum entre cette vitesse de consigne initialement choisie $V_{cons}$ et la vitesse moyenne $V_{latd}$ des véhicules circulant sur la voie latérale adjacente à droite à laquelle on ajoute une valeur $V_3$ si le trafic est considéré comme normal et non plus fluide, et une valeur $V_2$ s'il est considéré comme dense, $V_3$ étant supérieure à $V_2$, soit $Min(V_{latd}+ V_3, V_{cons})$ et $Min(V_{latd}+ V_2 \ V_{cons})$.

Si le conducteur dépasse par la voie de droite d'autres véhicules à sa gauche, la vitesse de consigne du véhicule régulé est amenée à celle de la file immédiatement à gauche dudit véhicule, majorée de quelques kilomètres par heure, suivant la densité du trafic déterminée par le module de reconnaissance automatique de densité équipant le véhicule. Sur la colonne de droite du tableau 6, on constate que la valeur de la vitesse de consigne est le minimum entre cette vitesse de consigne initialement choisie $V_{cons}$ et la vitesse moyenne $V_{latg}$ des véhicules circulant sur la voie latérale adjacente à gauche à laquelle on ajoute une valeur $V_2$ si le trafic est considéré comme fluide et non plus normal, et une valeur $V_1$ s'il est considéré comme normal ou dense, $V_2$ étant supérieure à $V_1$, soit $Min(V_{latg}+ V_2, V_{cons})$ et $Min(V_{latg}+ V_1, V_{cons})$, à condition que la différence entre $V_{cons}$ et $V_{latg}$ soit supérieure à $V_2$, respectivement $V_1$, soit : $(V_{cons} - V_{latg}) > V_2$, respectivement $(V_{cons} - V_{latg}) > V_1$. Si cette condition n'est pas remplie, la vitesse de consigne reste celle $V_{cons}$ choisie par le conducteur.

Dans le cas où le véhicule régulé circule sur la voie centrale d'une route à trois voies, la vitesse de consigne est comprise dans l'intervalle des vitesses latérales adjacentes à droite $V_{latd}$ et à gauche $V_{latg}$. Plus précisément, comme le montre la colonne centrale du tableau 6, lorsque le trafic est fluide la vitesse de consigne est égale au minimum entre la vitesse des véhicules sur la voie latérale de gauche $V_{latg}$ à laquelle on ajoute une valeur $V_1$ soit $(V_{latg}+ V_1)$, la vitesse des véhicules sur la voie latérale de droite $V_{latd}$ à laquelle on ajoute une valeur $V_3$ soit $(V_{latd}+ V_3)$ et la vitesse de consigne $V_{cons}$ choisie par le conducteur, soit $Min(V_{latg}{}^+ V_1, V_{cons}, V_{latd}+ V_3)$. Lorsque le trafic est normal, on remplace la valeur $V_3$ par la valeur $V_2$ inférieure, et lorsque le trafic est dense, la vitesse de consigne est égale au minimum entre la vitesse des véhicules sur la voie latérale de gauche $V_{latg}$, la vitesse des véhicules sur la voie latérale de droite $V_{latd}$ à laquelle on ajoute une valeur $V_1$ inférieure à $V_2$ soit $(V_{latg}+ V_1)$ et la vitesse de consigne $V_{cons}$ choisie par le conducteur, c'est-à-dire $Min(V_{latd}+ V_1, V_{cons}, V_{latg})$. Selon une caractéristique de l'invention, les valeurs $V_1$, $V_2$ et $V_3$ majorant ou minorant la vitesse de la voie adjacente à la voie de circulation du véhicule régulé peuvent varier selon une loi fonction de la vitesse courante ($V_{it}$), par exemple une loi proportionnelle telle que : $V_i = K_i \ x V_{it}{}^+ M_i$ pour i =1,2,3 de telle sorte que les écarts entre deux de ces valeurs consécutives $V_1$ et $V_2$, ou $V_3$ et Va , sont plus faibles à basse vitesse qu'à vitesse élevée. Ainsi, pour une vitesse courante de 80km/h, les valeurs peuvent être $V_1$=10km/h, $V_2$=20km/h et $V_3$=30km/h, alors que pour une vitesse courante de 180km/h les valeurs peuvent être $V_1$=20km/h, $V_2$=50km/h et $V_3$=70km/h.

L'opérateur minimum (Min) permet de conserver la vitesse de consigne d'un conducteur qui choisit un seuil de vitesse inférieur à celui calculé de façon adaptative à partir de la vitesse moyenne dans chaque voie latérale adjacente.

En l'absence de véhicule autre que celui du régulateur de distance, c'est la vitesse de consigne choisie par le conducteur qui est appliquée.

Le procédé de régulation selon l'invention a pour avantage de donner une maîtrise supplémentaire au conducteur sur le système et améliore la prestation grâce à l'adaptation de la distance de suivi à la suite d'une action du conducteur sur la pédale d'accélérateur et/ou sur les boutons «-» et « resume ». Il permet également l'adaptation aux conditions météorologiques en imposant une distance de suivi longue pour accroître la marge temporelle d'une éventuelle reprise en main. De plus, une vitesse de consigne adaptative qui abaisse le seuil de vitesse sélectionné par le conducteur en fonction de la vitesse sur les voies latérales adjacentes à celle du véhicule régulé est une mesure de précaution permettant de réduire les écarts de vitesse entre les véhicules sur des voies parallèles.

ANNEXE

TABLEAU 1

|  | **Précoce** | **Standard** | **Tardif** |
|---|---|---|---|
| **Calme** | L1 ; t=2s (temps de suivi) | L2 ; t=1,6s | L2 ; t=1,6s |
| **Dynamique** | L3 ; t=1,4s | L4 ; t= 1,2s | L4 ; t= 1,2s |
| **Sport** | L4 ; t= 1,2s | L5; t=1s | L5; t=ls |

TABLEAU 2

|  | Situation initiale : précoce | **Après une 1ère action sur l'accélérateur en suivi : standard** | **Après une 2ème action sur l'accélérateur en suivi : tardif** |
|---|---|---|---|
| **Calme** | L1 ; t=2s | L2 ; t=1,6s | L2 ; t=1,6s |
| **Dynamique** | L3 ; t=1,4s | L4 ; t= 1,2s | L4 ; t= 1,2s |
| **Sport** | L4;t=1,2s | L5 ; t=1s | L5 ; t=1s |

TABLEAU 3

|  | **Fluide** | **Normal** | **Dense** |
|---|---|---|---|
| **Approche** | $I_i$ | $I_i$ | $I_i$ |
| **Suivi** | $I_{i+1}$ | $I_{i+1}$ | $I_{i+1}$ |
| **Déboîtement** | $I_i$ | $I_i$ | $h_i$ |
| **Insertion** | $I_i$ | $I_i$ | $I_i$ |

TABLEAU 4

|  | **Fluide** | **Normal** | **Dense** |
|---|---|---|---|
| **Approche** | $I_{i-1}$ | $I_{i-2}$ | $I_{i-3}$ |
| **Suivi** | $I_{i-1}$ | $I_{i-2}$ | $I_{i-3}$ |
| **Déboîtement** | $I_i$ | $I_i$ | $I$ |
| **Insertion** | $I_{i-2}$ | $I_{i-2}$ | $I_{i-3}$ |

TABLEAU 5

| Mode de déconnexion de la régulation | Par le bouton off | Par appui sur la pédale de frein | | |
|---|---|---|---|---|
| Phase | | En approche ou en suivi | En danger ou en insertion | En régulation de vitesse ou en observation |
| Conséquence sur la réduction du temps de suivi | Conservation de la réduction du temps de suivi | Suppression de la réduction du temps de suivi | Suppression de la réduction du temps de suivi et freinage précoce | Conservation de la réduction du temps de suivi |

TABLEAU 6

| Vitesse de consigne | | | |
|---|---|---|---|
| Trafic | Doublement par la gauche | Doublement entre les voitures | Doublement par la droite |
| Fluide | $V_{cons}$ | $Min[V_{latg}+V_1, V_{cons}, V_{latd} + V_3]$ | $Min(V_{latg} + V_2, {}^V cons)$ si $V_{cons}-V_{latg} > -V_2$ sinon $V_{cons}$ |
| Normal | $Min(V_{latd} + V_3, V_{cons})$ | $Min[V_{latg}+V_1, V_{cons}, V_{latd} +V_2]$ | $Min(V_{latg} + V_1, V_{cons})$ si $V_{cons}-V_{latg} > V_1$ sinon $V_{cons}$ |
| Dense | $Min(V_{latd} + V_2, V_{cons})$ | $Min[V_{latg}, V_{cons}, {}^V latd + V_1]$ | $Min(V_{latg} + V_1, V_{cons})$ si ${}^V cons-{}^V latg > V_1$ sinon $V_{cons}$ |

**Revendications**

**1.** Procédé de régulation adaptative de la distance entre deux véhicules circulant dans la même direction, le véhicule régulé suivant l'autre détecté comme cible, par établissement d'une loi de contrôle de l'accélération du véhicule selon différents scénarios routiers, qui sont définis à partir de la distance de consigne entre le véhicule suiveur et la cible suivie, en réglant graduellement le temps de suivi entre le véhicule régulé et le véhicule cible, en fonction du comportement du conducteur défini par son style de conduite et son caractère de freinage, du trafic routier et des actions du conducteur, identifiées avant et pendant la régulation de distance, sur les différentes touches d'une interface de commande placée sur le volant du véhicule pour la marche et l'arrêt de la régulation de distance, ainsi que sur les touches d'augmentation et de diminution de la vitesse de consigne, **caractérisé en ce que** la loi de régulation de la distance, par contrôle de l'accélération, sélectionnée initialement en phase de suivi est modifiée par au moins une impulsion sur la pédale d'accélérateur alors que le véhicule est en régulation de distance, dans le sens d'une réduction du temps de suivi.

**2.** Procédé de régulation adaptative de la distance entre deux véhicules circulant dans la même direction, le véhicule régulé suivant l'autre détecté comme cible, par établissement d'une loi de contrôle de l'accélération du véhicule selon différents scénarios routiers, qui sont définis à partir de la distance de consigne entre le véhicule suiveur et la cible suivie, en réglant graduellement le temps de suivi entre le véhicule régulé et le véhicule cible, en fonction du comportement du conducteur défini par son style de conduite et son caractère de freinage, du trafic routier et des actions du conducteur, identifiées avant et pendant la régulation de distance, sur les différentes touches d'une interface de commande placée sur le volant du véhicule pour la marche et l'arrêt de la régulation de distance, ainsi que sur les touches d'augmentation et de diminution de la vitesse de consigne, **caractérisé en ce que** la loi de régulation de la distance par contrôle de l'accélération sélectionnée initialement en phase de suivi est modifiée par la première impulsion sur le bouton « - » de l'interface à la mise en route du régulateur, dans le sens d'une augmentation du temps de suivi qui aurait été choisi en l'absence de cette action.

**3.** Procédé de régulation adaptative de la distance entre deux véhicules selon la revendication 2, **caractérisé en ce que** la valeur de ladite augmentation du temps de suivi à la suite d'une mise en route du régulateur de distance par une action sur le bouton « - », s'accroît en fonction de la densité de trafic.

4.  Procédé de régulation adaptative de la distance entre deux véhicules selon la revendication 2, **caractérisé en ce que** ladite augmentation du temps de suivi, à la suite d'une mise en route du régulateur par une action sur le bouton « - », est réalisée par le positionnement du caractère de freinage précoce en particulier lorsque le caractère de freinage est positionné en tardif.

5.  Procédé de régulation adaptative de la distance entre deux véhicules selon la revendication 2, **caractérisé en ce que** la réduction du temps de suivi, survenue en phase de suivi d'une cible uniquement, en raison d'une action sur le bouton « - » ou de l'impulsion sur la pédale d'accélérateur, est supprimée à condition que le conducteur arrête la régulation par une action sur la pédale de frein, alors que le véhicule est dans une phase d'approche ou de suivi, mais le changement du caractère de freinage reste valable.

6.  Procédé de régulation adaptative de la distance entre deux véhicules selon l'une des revendications 1 ou 2, **caractérisé en ce que** la réduction du temps de suivi survenue en phase de suivi d'une cible et le positionnement du caractère de freinage précoce sont supprimés si le conducteur décide d'arrêter la régulation par une action sur la pédale de frein, alors que le véhicule est en phase de danger ou d'insertion.

7.  Procédé de régulation adaptative de la distance entre deux véhicules selon l'une des revendications 1 ou 2, **caractérisé en ce que** la réduction du temps de suivi, liée à une impulsion sur la pédale d'accélérateur est conservée si le conducteur décide d'arrêter la régulation par une action sur le bouton « off » d'arrêt au volant ou sur la pédale de frein, alors que le véhicule est en phase de régulation de vitesse ou d'observation.

8.  Procédé de régulation adaptative de la distance entre deux véhicules circulant dans la même direction, le véhicule régulé suivant l'autre détecté comme cible, par établissement d'une loi de contrôle de l'accélération du véhicule selon différents scénarios routiers, qui sont définis à partir de la distance de consigne entre le véhicule suiveur et la cible suivie, en réglant graduellement le temps de suivi entre le véhicule régulé et le véhicule cible, en fonction du comportement du conducteur défini par son style de conduite et son caractère de freinage, du trafic routier et des actions du conducteur, identifiées avant et pendant la régulation de distance, sur les différentes touches d'une interface de commande placée sur le volant du véhicule pour la marche et l'arrêt de la régulation de distance, ainsi que sur les touches d'augmentation et de diminution de la vitesse de consigne, **caractérisé en ce que** la loi de régulation de la distance, par contrôle de l'accélération, sélectionnée initialement est modifiée automatiquement lors de la détection de brouillard ou de pluie intense réduisant la visibilité en imposant le temps de suivi maximal, ces conditions météorologiques étant détectées par des capteurs appropriés.

9.  Procédé de régulation adaptative de la distance entre deux véhicules circulant dans la même direction, le véhicule régulé suivant l'autre détecté comme cible, par établissement d'une loi de contrôle de l'accélération du véhicule selon différents scénarios routiers, qui sont définis à partir de la distance de consigne entre le véhicule suiveur et la cible suivie, en réglant graduellement le temps de suivi entre le véhicule régulé et le véhicule cible, en fonction du comportement du conducteur défini par son style de conduite et son caractère de freinage, du trafic routier et des actions du conducteur, identifiées avant et pendant la régulation de distance, sur les différentes touches d'une interface de commande placée sur le volant du véhicule pour la marche et l'arrêt de la régulation de distance, ainsi que sur les touches d'augmentation et de diminution de la vitesse de consigne, **caractérisé en ce que** la loi de régulation de la distance, par contrôle de l'accélération, sélectionnée lors de la mise en route du régulateur par une première impulsion sur le bouton « resume » impose un temps de suivi maximal, qu'une deuxième impulsion sur le bouton « resume » rend la loi de régulation adaptative avec un temps de suivi calculé automatiquement en fonction du style de conduite et de la densité du trafic routier, qu'une troisième impulsion sur « resume » impose un temps de suivi minimal, et que toute nouvelle impulsion permute successivement deux des trois étapes de ce cycle de calcul du temps de suivi.

10.  Procédé de régulation adaptative de la distance entre deux véhicules circulant dans la même direction, le véhicule régulé suivant l'autre détecté comme cible, par établissement d'une loi de contrôle de l'accélération du véhicule selon différents scénarios routiers, qui sont définis à partir de la distance de consigne entre le véhicule suiveur et la cible suivie, en réglant graduellement le temps de suivi entre le véhicule régulé et le véhicule cible, en fonction du comportement du conducteur défini par son style de conduite et son caractère de freinage, du trafic routier et des actions du conducteur, identifiées avant et pendant la régulation de distance, sur les différentes touches d'une interface de commande placée sur le volant du véhicule pour la marche et l'arrêt de la régulation de distance, ainsi que sur les touches d'augmentation et de diminution de la vitesse de consigne, **caractérisé en ce que** la loi de régulation de la distance, par contrôle de l'accélération, sélectionnée lors de la mise en route du régulateur par une première impulsion sur le bouton « resume » impose un temps de suivi maximal, qu'une deuxième impulsion sur le bouton « resume » rend la loi de régulation adaptative avec un temps de suivi calculé automatiquement en fonction du style de conduite et de la densité du trafic routier et variant entre cette valeur maximale imposée et un premier seuil inférieur, qu'une troisième impulsion sur « resume » rend la loi de régulation adaptative avec un temps de suivi calculé automatiquement en fonction du style de conduite et de la densité du trafic routier et variant entre cette valeur maximale imposée et un second seuil inférieur, et que toute nouvelle impulsion permute successivement deux des trois étapes de ce cycle de calcul du temps de suivi.

**11.** Procédé de régulation adaptative de la distance entre deux véhicules circulant dans la même direction, le véhicule régulé suivant l'autre détecté comme cible, par établissement d'une loi de contrôle de l'accélération du véhicule selon différents scénarios routiers, qui sont définis à partir de la distance de consigne entre le véhicule suiveur et la cible suivie, en réglant graduellement le temps de suivi entre le véhicule régulé et le véhicule cible, en fonction du comportement du conducteur défini par son style de conduite et son caractère de freinage, du trafic routier et des actions du conducteur, identifiées avant et pendant la régulation de distance, sur les différentes touches d'une interface de commande placée sur le volant du véhicule pour la marche et l'arrêt de la régulation de distance, ainsi que sur les touches d'augmentation et de diminution de la vitesse de consigne, **caractérisé en ce que** la loi de contrôle de l'accélération du véhicule sélectionnée initialement est modifiée par réduction adaptative de la vitesse de consigne en fonction de la densité du trafic routier, de la vitesse des véhicules sur les voies adjacentes et de la vitesse des véhicules sur lesdites voies de circulation et en fonction de la position du véhicule régulé sur lesdites voies de circulation.

**12.** Procédé de régulation adaptative de la distance entre deux véhicules selon la revendication 11, **caractérisé en ce que** l'abaissement de la vitesse de consigne sélectionnée par le conducteur varie différemment selon la position du véhicule régulé sur les voies de circulation, c'est-à-dire s'il dépasse un ou plusieurs véhicules cibles par la file de droite, s'il double par la file de gauche ou en circulant sur la voie centrale dans le cas d'une route à au moins trois voies.

**13.** Procédé de régulation adaptative de la distance entre deux véhicules selon la revendication 12, **caractérisé en ce que**, si le conducteur souhaite doubler par la voie de gauche de la circulation, la vitesse de consigne est minorée d'autant plus fortement que la densité du trafic augmente et la valeur de la vitesse de consigne déterminée est le minimum entre cette vitesse de consigne initialement choisie ($V_{cons}$) et la vitesse moyenne ($V_{latd}$) des véhicules circulant sur la voie latérale adjacente à droite à laquelle on ajoute une valeur ($V_3$) si le trafic est considéré comme normal et non plus fluide, et une valeur ($V_2$) s'il est considéré comme dense, ($V_3$) étant supérieure à ($V_2$), soit [Min ($V_{,latd}$+ $V_3$, $V_{cons}$)] et [Min($V_{latd}$+ $V_2$ , $V_{cons}$)].

**14.** Procédé de régulation adaptative de la distance entre deux véhicules selon la revendication 12, **caractérisé en ce que**, si le conducteur souhaite dépasser par la voie de droite, la vitesse de consigne du véhicule régulé est amenée à celle de la file immédiatement à gauche dudit véhicule, majorée de quelques kilomètres par heure, suivant la densité du trafic déterminée par le module de reconnaissance automatique de densité équipant le véhicule et la valeur de la vitesse de consigne ainsi déterminée est le minimum entre cette vitesse de consigne initialement choisie ($V_{cons}$) et la vitesse moyenne ($V_{latg}$) des véhicules circulant sur la voie latérale adjacente à gauche à laquelle on ajoute une valeur ($V_2$) si le trafic est considéré comme fluide et non plus normal, et une valeur ($V_1$) s'il est considéré comme normal ou dense, ($V_2$) étant supérieure à ($V_1$), soit [Min($V_{latg}$+ $V_2$, $V_{cons}$)] et [(Min ($V_{latg}$+ $V_1$ , $V_{cons}$)], à condition que la différence entre ($V_{cons}$ et $V_{latg}$) soit supérieure à ($V_2$), respectivement ($V_1$), soit ($V_{cons}$ - $V_{latg}$) > $V_2$, respectivement ($V_{cons}$ - $V_{latg}$) $^>$ $V_1$ et si cette condition n'est pas remplie, la vitesse de consigne ($V_{cons}$) reste celle choisie par le conducteur.

**15.** Procédé de régulation adaptative de la distance entre deux véhicules selon la revendication 12, **caractérisé en ce que**, dans le cas où le véhicule régulé circule sur la voie centrale d'une route à trois voies, la vitesse de consigne est comprise dans l'intervalle des vitesses latérales adjacentes à droite ($V_{latd}$) et à gauche ($V_{latg}$), soit :

-    lorsque le trafic est fluide, la vitesse de consigne est égale au minimum entre la vitesse des véhicules sur la voie latérale de gauche ($V_{latg}$) à laquelle on ajoute une valeur ($V_1$) soit ($V_{latg}$+ $V_1$) la vitesse des véhicules sur la voie latérale de droite ($V_{latd}$) à laquelle on ajoute une valeur ($V_3$) soit ($V_{latd}$+ $V_3$) et la vitesse de consigne ($V_{cons}$) choisie par le conducteur, c'est-à-dire :

$$[Min(V_{latg}+ V_1, V_{cons}, V_{latd}+ V_3)];$$

- lorsque le trafic est normal, on remplace la valeur ($V_3$) par la valeur ($V_2$) inférieure, et
- lorsque le trafic est dense, la vitesse de consigne est égale au minimum entre la vitesse des véhicules sur la voie latérale de gauche ($V_{latg}$), la vitesse des véhicules sur la voie latérale de droite ($V_{latd}$) à laquelle on ajoute une valeur ($V_1$) inférieure à ($V_2$) et la vitesse de consigne ($V_{cons}$) choisie par le conducteur, soit :

$$[Min(V_{latd}+ V_1, V_{cons}, V_{latg})].$$

16. Procédé de régulation adaptative de la distance entre deux véhicules selon l'une des revendications 13 à 15, **caractérisé en ce que** les valeurs ($V_1$, $V_2$ et $V_3$) majorant ou minorant la vitesse de la voie adjacente à la voie de circulation du véhicule régulé sont fonction de la vitesse courante ($V_{it}$) de telle sorte que les écarts entre deux de ces valeurs consécutives ($V_1$et $V_2$), ou ($V_2$ et $V_3$), sont plus faibles à basse vitesse qu'à vitesse élevée.

17. Procédé de régulation adaptative de la distance entre deux véhicules selon la revendication 16, **caractérisé en ce que**, les valeurs ($V_1$, $V_2$ et $V_3$) majorant ou minorant la vitesse de la voie adjacente à la voie de circulation du véhicule régulé varient selon une loi proportionnelle à la vitesse courante ($V_{it}$), telle que :
$V_i = K_i xV_{it} + M_i$ pour i =1,2,3, de telle sorte que pour une vitesse courante de 80km/h, les valeurs sont $V_1$=10km/h, $V_2$=20km/h et $V_3$=30km/h, alors que pour une vitesse courante de 180km/h les valeurs sont $V_1$=20km/h, $V_2$=50km/h et $V_3$=70km/h, ces valeurs correspondant à des coefficients respectifs $K_1$= 0.1, $K_2$=0.3, $K_3$=0.4, $M_1$=+2, $M_2$=-4 et $M_3$=-2.

Office européen
des brevets

**RAPPORT DE RECHERCHE EUROPEENNE**

Numéro de la demande

EP 03 29 1461

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 44 37 678 A (TELEFUNKEN MICROELECTRON) 2 mai 1996 (1996-05-02) | 1,6 | B60K31/00 |
| A | * revendications 1,3,8,14 * | 7 | |
| X | DE 42 09 047 C (DAIMLER-BENZ AG) 26 août 1993 (1993-08-26) * revendication 2 * | 1,8 | |
| X | EP 0 827 860 A (VOLKSWAGENWERK AG) 11 mars 1998 (1998-03-11) * revendications 1,3,5 * | 1 | |
| X | DE 199 43 611 A (BOSCH GMBH ROBERT) 22 mars 2001 (2001-03-22) * revendications * | 8 | |
| X | WO 00 36435 A (RENAULT) 22 juin 2000 (2000-06-22) | 11 | |
| A | * revendications; figures * | 12-17 | |
| X | FR 2 763 902 A (GEN MOTORS CORP) 4 décembre 1998 (1998-12-04) | 11 | DOMAINES TECHNIQUES RECHERCHES (Int.Cl.7) |
| A | * revendication 4 * | 14 | B60K |
| A | EP 0 876 936 A (MAN NUTZFAHRZEUGE AG) 11 novembre 1998 (1998-11-11) * fig. 3, bouton 30 * * revendications 1-3; figure 1 * | 2-5,7,9, 10 | G01S G05D G08G B60T |
| A | EP 0 876 935 A (MAN NUTZFAHRZEUGE AG) 11 novembre 1998 (1998-11-11) * revendications; figures * | 2-5,7,9, 10 | |
| A | DE 43 38 098 A (DAIMLER BENZ AG) 11 mai 1995 (1995-05-11) * revendications; figures * | 2-4,9,10 | |

Le présent rapport a été établi pour toutes les revendications

| Lieu de la recherche | Date d'achèvement de la recherche | Examinateur |
|---|---|---|
| LA HAYE | 13 octobre 2003 | Bufacchi, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen**

**des brevets**

Numéro de la demande

EP 03 29 1461

---

## REVENDICATIONS DONNANT LIEU AU PAIEMENT DE TAXES

La présente demande de brevet européen comportait lors de son dépôt plus de dix revendications

☐ Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

☐ Aucune taxe de revendication n'ayant été acquittée dans les délais prescrits, le présent rapport de recherche européenne a été établi pour les dix premières revendications.

---

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

☐ Toutes les nouvelles taxes de recherche ayant été acquittées dans les délais impartis, le présent rapport de recherche européenne a été établi pour toutes les revendications.

☒ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

**ABSENCE D'UNITÉ D'INVENTION
FEUILLE SUPPLÉMENTAIRE B**

La division de la recherche estime que la présente demande de brevet européen ne satisfait pas à l'exigence relative à l'unité d'invention et concerne plusieurs inventions ou pluralités d'inventions, à savoir :

1. revendications: 1,6,7

   Régulation de distance parmis impusion sur la pédale d'accélérateur

2. revendications: 2-7

   Régulation de distance parmis impusion sur le bouton <<->> du régulateur

3. revendication : 8

   Régulation de distance automatique parmis détection de visibilité (brouillard, pluie etc.)

4. revendications: 9,10

   Régulation de distance parmis impusion sur le bouton <<Resume>> du régulateur

5. revendications: 11-17

   Régulation de distance en fonction de la densité du trafic routier et de la vitesse des véhicules sur les voies adjacentes

EPO FORM P0402

## ANNEXE AU RAPPORT DE RECHERCHE EUROPEENNE
## RELATIF A LA DEMANDE DE BREVET EUROPEEN NO.

EP 03 29 1461

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2003

| Document brevet cité au rapport de recherche | | Date de publication | Membre(s) de la famille de brevet(s) | | Date de publication |
|---|---|---|---|---|---|
| DE 4437678 | A | 02-05-1996 | DE | 4437678 A1 | 02-05-1996 |
| DE 4209047 | C | 26-08-1993 | DE | 4209047 C1 | 26-08-1993 |
| | | | GB | 2265241 A | 22-09-1993 |
| EP 0827860 | A | 11-03-1998 | DE | 59705954 D1 | 14-02-2002 |
| | | | EP | 0827860 A2 | 11-03-1998 |
| | | | ES | 2171242 T3 | 01-09-2002 |
| DE 19943611 | A | 22-03-2001 | DE | 19943611 A1 | 22-03-2001 |
| | | | CZ | 20020816 A3 | 17-07-2002 |
| | | | WO | 0120362 A1 | 22-03-2001 |
| | | | EP | 1218773 A1 | 03-07-2002 |
| | | | JP | 2003516892 T | 20-05-2003 |
| WO 0036435 | A | 22-06-2000 | FR | 2787586 A1 | 23-06-2000 |
| | | | EP | 1149307 A1 | 31-10-2001 |
| | | | WO | 0036435 A1 | 22-06-2000 |
| FR 2763902 | A | 04-12-1998 | US | 6223117 B1 | 24-04-2001 |
| | | | DE | 19823303 A1 | 10-12-1998 |
| | | | FR | 2763902 A1 | 04-12-1998 |
| EP 0876936 | A | 11-11-1998 | DE | 19719475 A1 | 12-11-1998 |
| | | | EP | 0876936 A1 | 11-11-1998 |
| EP 0876935 | A | 11-11-1998 | DE | 19719476 A1 | 12-11-1998 |
| | | | EP | 0876935 A1 | 11-11-1998 |
| DE 4338098 | A | 11-05-1995 | DE | 4338098 A1 | 11-05-1995 |

EPO FORM P0460

Pour tout renseignement concernant cette annexe : voir Journal Officiel de l'Office européen des brevets, No.12/82